# FASCICULE DE BREVET EUROPEEN

(11) **EP 0 487 428 B1**
(45) Date de publication et mention de la délivrance du brevet: **06.02.2002**
(21) Numéro de dépôt: 91403157.0
(22) Date de dépôt: 22.11.1991
(51) Int. Cl.: H04L 7/00, H04L 5/24

(54) **Dispositif pour la transmission d'informations synchrones par un réseau asynchrone, notamment un réseau ATM**
Anordnung für synchrone Informationsübertragung über ein asynchrones Netzwerk, insbesondere über ein ATM-Netzwerk
Circuit arrangement for the transmission of synchronous information over an asynchronous network, in particular an asynchronous transfer mode network

(30) Priorité: 23.11.1990 FR 9014625
(43) Date de publication de la demande: 27.05.1992
(73) Titulaire: Thales, 75008 Paris (FR)
(72) Inventeur: Sorton, Gérard, F-92045 Paris la Défense (FR); Grenot, Thierry, F-92045 Paris la Défense (FR)
(74) Mandataire: Lincot, Georges

(56) Documents cités:
- PROCEEDINGS INTERNATIONAL SWITCHING SYMPOSIUM 1987, Phoenix, Arizona, 15-20 mars 1987, pages 969-973; F. VAN DEN DOOL: "Synchronization aspects of ATD-IBC Networks"
- IDEM
- PROCEEDINGS IEEE GLOBAL TELECOMMUNICATIONS CONFERENCE, Dallas, Texas, 27-30 novembre 1989, pages 728-732; H.M. AHMED: "Adaptive terminal synchronization in packet data networks"

## Description

La présente invention concerne les réseaux de transmission asynchrones, notamment les réseaux de type dit ATM (*Asynchronous Transfer Mode* : mode asynchrone de transfert).

Dans ces réseaux, des informations numériques sont transmises de façon discontinue sous forme de paquets, appelés « cellules d'information » en terminologie ATM. Ce mode de transmission consiste, au lieu d'émettre octet par octet, à constituer dans l'équipement terminal émetteur (la source de données) un paquet de bits au fur et à mesure de la création des données numériques, et à attendre d'avoir suffisamment d'informations pour constituer une cellule d'information complète et envoyer celle-ci sur le réseau.

L'équipement émetteur produit ainsi des cellules d'informations à une cadence variable, selon qu'il utilise ou non le canal (par exemple aucune cellule n'est émise pendant les instants de silence), ou selon la cadence variable à laquelle les informations numériques sont produites (par exemple dans le cas typique des signaux vidéo différentiels, dont le volume de données dépend du caractère plus ou moins mobile de l'image à transmettre).

La cellule d'information qui va transiter sur le réseau comprend d'une part un en-tête porteur d'une adresse ou « identifiant de canal virtuel » et d'autre part un champ utile porteur de l'information à transmettre.

Les cellules d'informations provenant de plusieurs émetteurs sont mêlées en un flux continu, avec éventuellement des cellules vides intercalaires, qui transite le long d'artères à grand débit.

Les différentes artères du réseau relient une pluralité de noeuds, correspondant chacun à un équipement commutateur assurant le démultiplexage/multiplexage du flux de cellules en fonction de l'adresse contenue dans l'en-tête et des ressources disponibles à l'instant considéré.

Le réseau est asynchrone en ce que chaque noeud du réseau dispose d'une horloge particulière ayant sa fréquence (et donc sa dérive) propre, sans aucune coordination pour ajuster entre elles les horloges des différents noeuds.

Pour prendre en compte les écarts de fréquences inévitables, des mémoires tampons assurent les ajustements entre les cadences d'entrée et les cadences de sortie de chaque noeud. On voit ainsi que, par principe, le réseau est toujours fournisseur du rythme vers les terminaux qui lui sont raccordés.

La particularité d'un réseau de type ATM tient au fait que le commutateur se contente de gérer exclusivement l'en-tête de chaque cellule d'informations, en déterminant, d'après l'en-tête de la cellule entrante, l'adresse de destination et en calculant à partir de ce paramètre un nouvel en-tête, correspondant au canal (virtuel) qui aura été affecté sur l'artère commutée en aval de ce noeud.

En particulier, il n'est opéré aucune vérification (contrôle d'erreur intrinsèque, protocole d'acquittement, etc.) sur les données transmises, les contrôles éventuels étant reportés aux deux extrémités de la ligne, c'est-à-dire aux deux équipements échangeant les informations, qui devront donc vérifier l'intégrité et la conformité des informations échangées.

En général, un service correspond à un transfert d'informations entre deux équipements, chacun connecté à un noeud d'accès du réseau, donc pouvant avoir un écart de rythme, les horloges locales respectives de chacun de ces noeuds n'étant ni synchrones ni synchronisées.

Les services de durée limités à quelques minutes peuvent généralement se contenter de cette absence de synchronisation entre noeuds compte tenu de la précision et de la stabilité des horloges utilisées, de l'ordre de 10⁻⁸ au moins.

Toutefois, dans certaines situations, les utilisateurs peuvent être amenés à échanger des informations synchrones, soit qu'ils utilisent des terminaux synchrones, soit que le réseau asynchrone ne soit en fait qu'un sous-ensemble d'un réseau plus étendu, comprenant par exemple un commutateur synchrone auquel le réseau asynchrone devra être relié.

Le document de F Van den Door « synchronization aspects of ETD-IBC Networks », Proceediings International Switching Symposium 1987, Phoenix, Arizona, 15-20 mars 1987, divulgue plusieurs méthodes de traitement de l'information notamment les suivantes au cours de la lecture d'information, en cas de silence, le principe consiste à avancer rapidement dans la lecture pour corriger cette anomalie ; lorsque l'arrivée d'un paquet de cellules est retardée, la vitesse de lecture des informations est ralentie, et lorsque le paquet arrive en avance la vitesse de lecture des informations est accélérée ; les données sont reconstruites au niveau de la lecture en faisant varier la vitesse de lecture sans émettre de signal d'interruption générant des cellules de bourrage dans un tampon.

L'un des buts de l'invention est d'autoriser un tel mode de fonctionnement en permettant à un réseau essentiellement asynchrone d'opérer en mode synchrone, c'est-à-dire de permettre à chacun des équipements connectés au réseau de fonctionner avec des rythmes qui soient exactement identiques, donc véritablement synchrones et non simplement plésiochrones (des rythmes plésiochrones étant des rythmes de même fréquence mais non coordonnés, donc sujets aux dérives éventuelles des horloges, si précises que puissent être celles-ci).

En d'autres termes, le but de l'invention est d'émuler un circuit synchrone par un réseau asynchrone, c'est-à-dire de rendre un service synchrone dans un réseau asynchrone.

Pour cela, on va se trouver confronté à une pluralité d'anomalies de transmission, qui devront être prises en compte et corrigées.

On peut recenser essentiellement cinq anomalies de transmission :
― tout d'abord les interruptions de très longue durée de la transmission, supérieures à quelques centaines de millisecondes : dans un tel cas, le réseau considérera que le circuit est coupé et cherchera à en rétablir un autre ;
― les interruptions (évanouissements) de longue durée de la transmission, pouvant aller jusqu'à quelques centaines de millisecondes : dans ce cas, une partie de l'information sera perdue, mais on devra néammoins maintenir la synchronisation des horloges entre les deux équipements (maintien de la « continuité du circuit » en dépit la perte d'informations) ;
― la perte ou l'insertion de quelques cellules, due à des évanouissements brefs de transmission, d'une durée de quelques bits à quelques cellules : en effet, si l'évanouissement bref touche l'en-tête de la cellule, l'adresse contenue dans celui-ci va être altérée et la cellule sera donc dirigée vers une autre artère ; ces erreurs de routage, qui pourront amener à la disparition de cellules ou à l'insertion de cellules étrangères provenant d'autres communications, devront être détectées et compensées de manière à conserver la synchronisation par maintien de l'intégrité du nombre de cellules transmises ;
― la gigue du réseau : dans le cas d'un réseau asynchrone, du fait de l'utilisation de mémoires tampon pour assurer les ajustements entre les rythmes entrant et sortant de chaque noeud, il apparaît d'une cellule à la suivante un retard variable (la gigue) dû aux fluctuations des délais d'attente dans chaque noeud de transit du réseau ; comme l'on veut, pour fonctionner en mode synchrone, restituer les bits à la même fréquence en sortie qu'en entrée du réseau, il sera nécessaire de filtrer et compenser ces fluctuations ;
― enfin, la dérive lente entre l'horloge d'émission et l'horloge de réception va introduire inévitablement, si elle n'est pas compensée, un défaut de synchronisme entre les horloges d'émission et de réception : il faudra donc assurer une compensation permanente de cette dérive si l'on veut assurer un fonctionnement réellement synchrone et non seulement plésiochrone.

L'un des des buts de la présente invention est de pallier ces différentes anomalies de transmission (à l'exception des interruptions de très longue durée, qui conduisent à une rupture non récupérable du circuit), en compensant les différentes pertes ou duplications d'informations dues au plésiochronisme des horloges sur des durées assez longues ou pour des services continus.

Comme on le verra, la présente invention va permettre de compenser la dérivé à long terme entre les deux horloges, tout en lissant la gigue, typique d'une transmission asynchrone du fait des délais variables dans les files d'attente, ainsi que les anomalies de transmission telles qu'erreurs de transmission et évanouissements de propagation plus ou moins brefs.

A cet effet, le dispositif de la présente invention, qui est un dispositif du type précité, c'est-à-dire pour la transmission d'informations synchrones par un réseau asynchrone, notamment un réseau de type ATM, dans lequel les informations sont véhiculées par paquets de bits de données entre un organe émetteur, une interface de l'organe émetteur, un organe récepteur et une interface de l'organe récepteur, chacun de ces paquets étant formé d'une cellule d'information comprenant d'une part un en-tête porteur d'une adresse et d'autre part un champ utile portant l'information à transmettre, l'organe émetteur et l'organe récepteur fonctionnant entre eux en mode synchrone sur la base d'une horloge locale d'émission et d'une horloge locale de restitution à la réception, respectivement plésiochrones, le dispositif d'interface de l'organe récepteur comportant un tampon de restitution recevant en entrée un flux de cellules d'information selon un rythme irrégulier du réseau asynchrone et délivrant en sortie des cellules d'information à un rythme régulier de l'horloge locale, caractérisé en ce qu'il comporte en combinaison :
- des premiers moyens pour détecter des interruptions de longue durée ou évanouissement dans le flux de cellules reçues CR par ledit organe récepteur, comprenant un compteur de cellules locales CL avec remise à zéro pour chaque cellule locale reçue CR, des moyens pour comparer une valeur du compteur à une valeur de seuil S prédéterminé et adapté à générer en cas de franchissement de le valeur seuil S un signal d'interruption de longue durée ILD,
- des seconds moyens pour détecter et compenser une perte ou une insertion de cellules, adaptés pour :
   - compter le nombre de cellules reçues par l'organe récepteur (2) dans un compteur,
   - compter le nombre de cellules émises par l'organe émetteur (1) et émettre une cellule spécifique contenant le nombre de cellules émises,
   - comparer à chaque réception d'une cellule spécifique, la valeur du nombre contenu dans la cellule spécifique au nombre de cellules reçues, et
   - en cas de différence entre lesdites valeurs générer un signal de correction pour incrémenter ou décrémenter un pointeur d'adressage du tampon de restitution,
- des troisièmes moyens recevant le signal d'interruption de longue durée, le signal de correction, les tops de cellules locales, les tops de cellules reçues, adaptés à réduire la gigue et la compensation de la dérive de l'horloge et à générer un signal d'asservissement de fréquence fonction du degré de remplissage du tampon de restitution vers ladite horloge de restitution, ledit signal d'asservissement de fréquence étant inhibé par le signal d'interruption de longue durée.

Les seconds moyens comportent par exemple :
- des moyens pour discriminer les cellules normales des cellules spécifiques insérées au niveau de l'organe émetteur,
- un circuit adapté à :
   - incrémenter le compteur local d'une unité sur réception d'une cellule normale,
   - générer sur le top d'horloge une cellule de bourrage en cas d'interruption de longue durée
- des moyens pour comparer la valeur contenue dans une cellule spécifique avec la valeur du compteur local et en cas d'écart à produire un signal pour modifier la valeur du pointeur d'adressage du tampon de restitution.

Le dispositif peut comporter un compteur/décompteur recevant les tops de cellules locales CL, les tops de cellules reçues CR et le signal de correction CPT, le signal d'interruption de longue durée et à délivrer un signal d'asservissement ASF vers l'horloge de restitution.

Le dispositif comporte par exemple un circuit diviseur de fréquence recevant un signal d'horloge CK et délivrant les tops de cellules locales CL.

Il peut comporter un circuit d'initialisation adapté pour remplir la mémoire tampon à une valeur de référence et à intialiser la position du pointeur de mémoire tampon à sa position de référence.

Le paramètre utilisé pour générer le signal d'asservissement est la position moyenne du pointeur dans le tampon.

D'autres caractéristiques et avantages de l'invention apparaîtront à la lecture de la description détaillée ci-dessous, faite en référence aux dessins annexés.

La figure 1 représente, de façon schématique, un réseau de transmission asynchrone reliant deux équipements d'entrée et de sortie.

La figure 2 montre la structure générale d'une cellule d'information transmise par un tel réseau.

La figure 3 est un diagramme montrant la structure des principaux éléments de l'équipement récepteur permettant de mettre en oeuvre les caractéristiques de l'invention.

La figure 4 présente divers chronogrammes montrant les tops de synchronisation à différents niveaux de la transmission.

La figure 5 est un schéma par blocs illustrant les différents éléments fonctionnels du dispositif de l'invention.

La figure 6 est un schéma par blocs du circuit détecteur des interruptions de longue durée.

La figure 7 est un schéma par blocs du circuit de détection des pertes ou insertions de cellules dans le flux transmis.

La figure 8 est un schéma par blocs du circuit d'asservissement de l'horloge locale de l'organe récepteur.

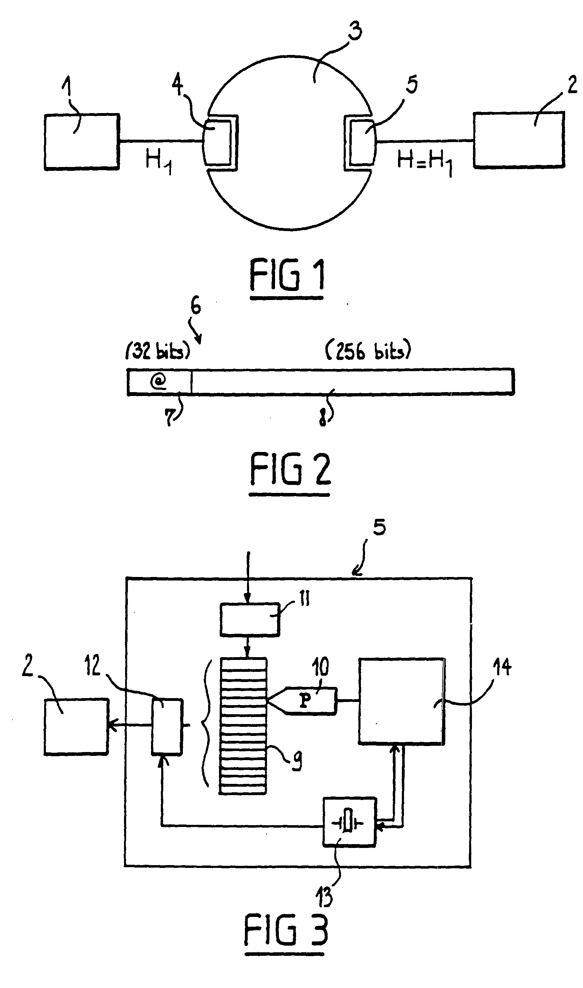

Sur la figure 1, la référence 1 désigne un équipement terminal fonctionnant en mode synchrone, à un rythme H₁.

Cet équipement émet vers un équipement récepteur 2, également synchrone, fonctionnant à un rythme H qui doit être le même que le rythme H₁ de l'équipement émetteur. La transmission des données est effectuée par un réseau asynchrone symbolisé en 3, l'interfaçage entre les équipements synchrones 1 et 2 et le réseau asynchrone 3 étant géré par des interfaces de liaison 4, 5, qui peuvent être aussi bien des dispositifs intégrés à l'équipement émetteur ou récepteur que des dispositifs réalisés sous la forme de boîtiers distincts assurant l'adaptation des équipements synchrones au réseau asynchrone.

L'invention peut notamment s'appliquer au traitement d'un transfert continu d'informations par train numérique à 2,048 Mbit/s dans un réseau ATM utilisant des artères à grande vitesse à 34,368 Mbit/s, transportant des cellules de 32 octets de charge utile, correspondant à la génération au noeud source d'une cellule toutes les 125 µs.

Le procédé n'est cependant, bien entendu, pas limité à ces valeurs numériques, et peut s'appliquer à d'autres valeurs de débit d'artère et de service, dès lors que le rapport entre ces deux grandeurs reste supérieur à un seuil donné (de l'ordre de 10 à 15) permettant d'assurer une décorrélation des retards entre cellules successives d'un même service suffisante pour compenser convenablement la gigue introduite par le réseau.

Par ailleurs, bien que, pour les besoins de la présente description, on considère ici un équipement émetteur 1 et un équipement récepteur 2, l'invention s'applique bien évidemment à des équipements à la fois émetteur et récepteur, c'est-à-dire fonctionnant en liaison bidirectionnelle.

Les cellules d'information transmises par le réseau asynchrone se présentent sous la forme illustrée figure 2, c'est-à-dire que chaque cellule 6 comporte un en-tête 7 contenant une adresse servant au routage de la cellule et un champ utile 8 porteur de l'information à transmettre proprement dite. Les dimensions des champs 7 et 8 sont, typiquement, de 32 et 256 bits respectivement, mais d'autres dimensions peuvent être envisagées aussi bien.

Le réseau 3 fonctionnant avec ses propres horloges, et en tenant compte en outre des perturbations possibles mentionnées plus haut, en l'absence de tout traitement on ne retrouve pas en aval un rythme d'horloge H strictement identique au rythme d'horloge amont.

Le problème consiste donc à analyser, au niveau de l'interface 5 de l'organe récepteur, le flux de cellules incident et à détecter et corriger les anomalies de transmission de manière à asservir l'horloge locale de restitution sur un rythme H qui soit identique au rythme H₁ de l'information source.

La figure 3 illustre la structure générale du circuit d'interfaçage 5.

Celui-ci comporte un tampon 9 fonctionnant en file d'attente « premier entré, premier sorti », ce tampon étant adressé par un pointeur 10 et ayant pour rôle d'assurer l'ajustement entre le rythme des données incidentes (circuit 11) et sortantes (circuit 12), délivrées à l'équipement synchrone 2.

Ce dispositif comporte une horloge locale 13 commandant la délivrance en sortie des informations (horloge de restitution), cette horloge étant asservie au moyen d'un circuit 14 commandant l'adressage du pointeur du tampon de la manière que l'on indiquera plus bas.

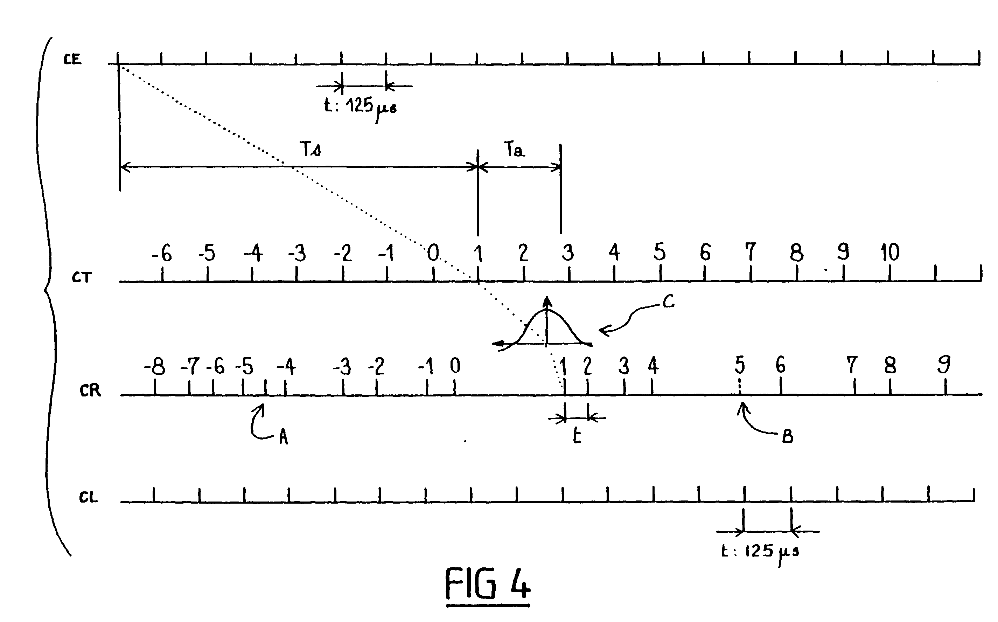

La figure 4 donne un certain nombre de chronogrammes montrant la position relative, dans le temps, des tops de synchronisation correspondant aux instants de début de chacune des cellules d'informations.

Le chronogramme CE (cellules émises) correspond au rythme des cellules émises par l'organe d'émission 1, à la cadence H. Dans cet exemple, l'organe émetteur génère une cellule toute les 125 µs, correspondant à un flux continu de cellules de 256 bits de charge utile chacune émises à 2,048 Mbit/s.

Le délai de traversée du réseau asynchrone par une cellule se compose de deux parties :
- une partie constante pour un circuit virtuel, liée au temps Tₛ de propagation électromagnétique et de traversée des circuits électroniques,
- une partie variable liée à la charge des artères empruntées, constituée d'une valeur moyenne Tₐ et d'une variation instantanée autour de cette valeur moyenne.

Après une durée de transmission synchrone Tₛ, ce flux de données se retrouve à l'interface 4, avec un décalage temporel mais sans perte de synchronisme, comme illustré en figure 4.

Après transmission par le réseau asynchrone 3, c'est-à-dire en entrée de l'interface 5, on retrouve le flux de cellules transmises (CT) avec la configuration indiquée en CR (cellules reçues) : outre l'introduction du délai de transmission Tₛ+Tₐ dans le réseau asynchrone, on peut noter que :
― des cellules parasites ont été introduites, comme illustré en A,
― des cellules émises ont été perdues, comme illustré en B, et
― le rythme de réception des cellules est devenu irrégulier, du fait des délais variables dans les diverses files d'attente des noeuds du réseau (phénomène de gigue, typique du réseau asynchrone) ; en d'autres termes, l'intervalle temporel t entre deux cellules reçues n'est plus constant, comme dans le cas de la transmission synchrone, mais présente seulement une valeur moyenne (ici de 125 µs, avec un écart-type de l'ordre de 60 µs).

Le but du dispositif de l'invention est de produire, à partir de l'analyse de ces tops CR (cellules reçues), des tops CL (cellules locales) qui présentent exactement le même rythme (périodicité t = 125 µs) que celui des cellules émises CE, ceci grâce à une compensation des divers phénomènes de perte d'informations, de la gigue du réseau et des dérives des horloges.

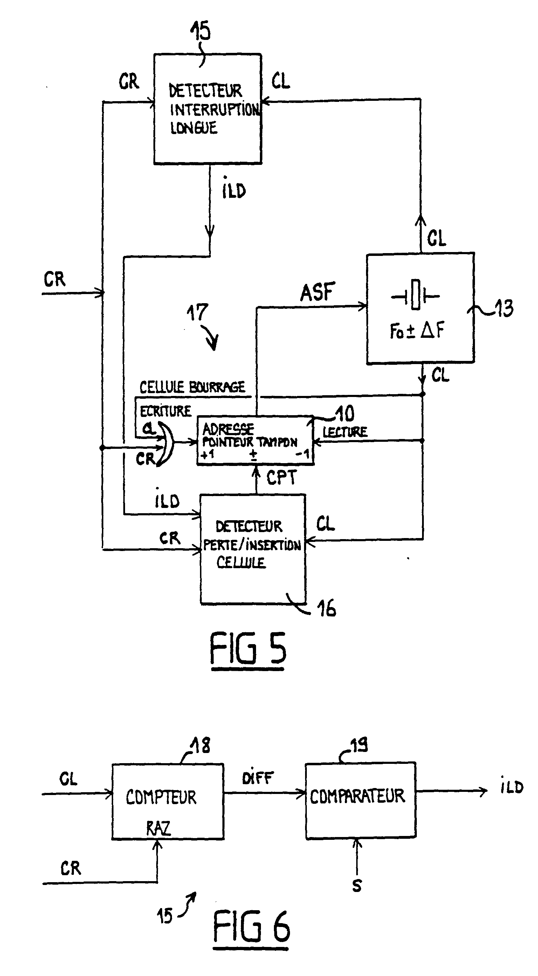

Un circuit permettant d'atteindre ce but a été représenté schématiquement figure 5.

Il comporte essentiellement, outre l'horloge de restitution 13 mentionnée plus haut générant les tops de cellules locales CL, un détecteur d'interruptions longues 15, un détecteur de pertes et insertions de cellules 16 et un circuit 17 de compensation de la gigue et des dérives de l'horloge.

Le circuit 15 de détection des interruptions de longue durée a été illustré schématiquement figure 6.

Essentiellement, ce circuit a pour objet de détecter le début d'une telle interruption, telle que définie au début de la présente description, afin d'inhiber les mécanismes de correction de l'intégrité cellulaire (circuit 16) et d'asservissement de l'horloge de restitution (circuit 17).

Ce circuit 15 comporte un compteur de cellules locales (tops CL) avec remise à zéro par chaque cellule reçue (tops CR). La valeur instantanée DIFF de ce compteur est appliquée à l'entrée d'un comparateur 19 réglé sur un seuil S, qui délivre un signal d'interruption de longue durée ILD lorsque le contenu du compteur dépasse le seuil prédéterminé, c'est-à-dire lorsque DIFF ≥ S. En d'autres termes, on considère qu'il y a interruption de longue durée lorsque l'on constate une absence d'au moins S cellules reçues consécutives (le compteur ne se remet plus à zéro faute de top CR), alors que l'horloge locale continue à fonctionner (production continue de top CL), correspondant à une consommation de cellules dans la mémoire tampon, et donc à un déchargement de celui-ci sans que la diminution du tampon ne soit compensée par un chargement corrélatif de nouvelles cellules.

Les expérimentations ont montré qu'une gigue de ± 6 périodes intercellulaires est très peu probable (probabilité < 10⁻⁸), et que l'on peut donc raisonnablement dire qu'il y aura interruption de longue durée en cas d'absence de cellules reçues sur une durée d'au moins six périodes intercellulaires. En d'autres termes, on règle le seuil S à une valeur S = 6, ce critère de détection assurant un taux de fausses alarmes inférieur à 10⁻⁸ (une fausse alarme correspondant à une indication d'interruption longue alors que l'interruption en question ne provient que de simples fluctuations du temps de transmission d'une cellule à la suivante).

La génération d'un signal ILD aura pour premier effet d'inhiber les mécanismes de correction de l'intégrité cellulaire et de l'asservissement d'horloge de restitution ; on verra, lorsque l'on décrira les circuits 16 et 17, comment cette fonction est mise en oeuvre. Pendant toute la durée où un signal ILD est produit, l'horloge de restitution fonctionne alors librement sur sa fréquence acquise, mais ceci sera sans incidence car la dérive de cette horloge est très faible.

D'autre part, le signal ILD déclenchera la création de cellules de bourrage, générées localement, pour remplacer les cellules non reçues et maintenir ainsi l'intégrité du nombre des cellules dans le flux transmis au récepteur ; la mémoire tampon restera alors à un niveau de remplissage satisfaisant pour le fonctionnement des divers mécanismes de correction et d'asservissement.

Dès que l'on recevra une cellule, le top de cellule reçue CR correspondant remettra à zéro le compteur 18 et fera retomber le dispositif en mode asservi.

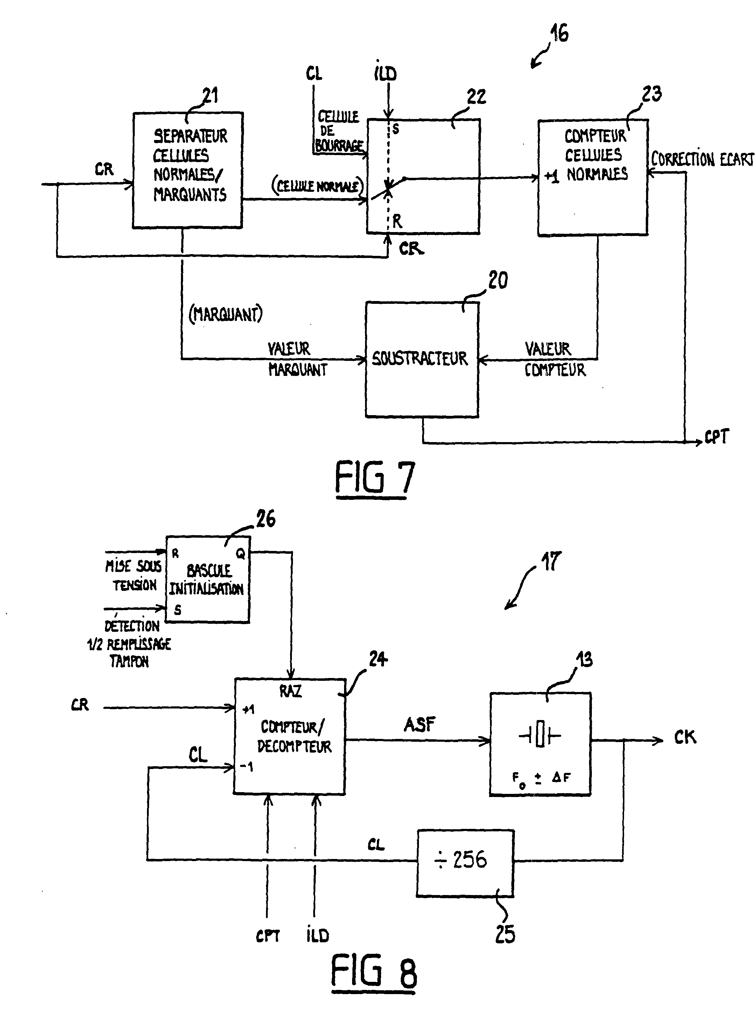

On va maintenant décrire, en référence à la figure 7, le circuit détecteur des pertes et insertion de cellules.

Ce circuit a pour objet de détecter et compenser les évanouissements ou interruptions de faible durée, qui se caractérisent de la manière suivante :
― si la durée est inférieure à celle d'une cellule (8 µs) et si l'erreur créée par l'évanouissement porte sur le champ d'adressage, cette erreur va créer des pertes ou insertions de cellules dans le circuit virtuel ;
― si la durée est inférieure à celle d'une cellule et si l'erreur porte sur le champ utile, cette erreur créera des cellules erronées, qui seront acceptées, mais à charge pour les équipements de prévoir des codes de contrôle, des protocoles d'acquittement, etc ;
― si la durée est supérieure à celle d'une cellule, on aura perte totale de la cellule, ou des cellules, transmises.

Pour détecter la perte ou l'insertion d'une cellule isolée ou de quelques cellules successives, et corriger l'anomalie afin d'assurer l'intégrité du flux de cellules (et donc le maintien de la cadence de synchronisation entre l'émetteur et le récepteur), on va utiliser un mécanisme de comptage des cellules aux deux extrémités (émetteur et récepteur) de la liaison, avec transfert régulier de l'état du compteur amont vers le récepteur ; ce transfert sera réalisé par insertion dans le flux d'une cellule spécifique, que l'on appellera ci-dessous « marquant ».

La comparaison entre la valeur du compteur local (nombre de cellules reçues) et la valeur du marquant reçu (nombre de cellules émises) permettra de détecter la perte ou l'insertion de cellules et d'insérer (dans le cas de cellules perdues) ou de supprimer (dans le cas de cellules insérées) des cellules dans le flux transmis à l'équipement synchrone.

Bien entendu, le mécanisme mis en oeuvre par l'invention a pour seul but d'assurer l'intégrité du flux de cellules entre émetteur et récepteur, c'est-à-dire le maintien du synchronisme, mais n'a pas pour objet de garantir l'intégrité de l'information transmise. Ce contrôle d'intégrité de l'information devra être réalisé par un mécanisme distinct, de type en lui-même connu (code de contrôle, etc.). On notera cependant qu'il existe des applications pour lesquelles on ne recherche pas une telle garantie d'intégrité, par exemple les transmissions d'image vidéo pour lesquelles on peut accepter quelques parasites introduits par la transmission.

Toutes les N cellules émises, l'équipement émetteur va donc créer et transmettre sur le réseau un marquant contenant la valeur du compteur ; de son côté, le récepteur va discriminer les marquants des cellules d'information proprement dites et analyser le contenu de ce marquant pour détecter les pertes ou insertions de cellules.

Pour permettre au procédé de résister à la perte du marquant avant qu'une détection d'interruption longue ne vienne le bloquer, on protège de préférence le contenu des marquants contre les erreurs de transmission par un code détecteur d'erreurs. Les marquants erronés seront donc rejetés, et on attendra le marquant sans erreur suivant pour procéder à la comparaison de l'état des compteurs (le compteur d'émission n'étant pas remis à zéro d'un marquant au suivant, mais continuant à progresser, le marquant ne fait que transmettre la valeur instantanée de ce compteur).

Par ailleurs, la correction de l'intégrité cellulaire doit se faire sans que le mécanisme d'asservissement de l'horloge de restitution n'intervienne (mécanisme décrit plus bas en référence à la figure 8), ce qui impose un filtrage des fluctuations sur une durée supérieure à l'intervalle entre deux marquants successifs.

Le circuit 16 de détection des pertes et insertions de cellules mettant en oeuvre ces fonctions est illustré figure 7.

Il comprend tout d'abord un circuit 21 assurant la discrimination entre les cellules normales et les marquants et filtrant les marquants erronés après analyse de leur code détecteur d'erreur.

En cas de réception d'un marquant, la valeur contenue dans celui-ci est extraite et appliquée à l'une des entrées d'un circuit comparateur 20 dont l'autre entrée reçoit la valeur du compteur local de cellules reçues 23.

Dans le cas d'une cellule d'information normale, une impulsion est appliquée au circuit 22 afin d'incrémenter d'une unité le compteur local 23. Le circuit 22 permet, en cas d'interruption de longue durée (signal ILD) de substituer à la cellule normale non reçue une cellule de bourrage générée localement (top d'horloge locale CL) ; le circuit 22 est constitué d'une bascule formant un multiplexeur à deux voies, positionné en réception de la cellule de bourrage en cas de production d'un signal ILD (entrée S : *Set*), et remis à zéro à l'arrivée d'une cellule reçue (top CR appliqué à l'entrée R : *Reset*).

En cas d'écart constaté en sortie du comparateur 20, le signal produit par ce circuit modifie la valeur du pointeur de tampon (contenu dans le registre 10) d'un nombre de cellules, en plus ou en moins, correspondant à la valeur CPT (Correction du Pointeur de Tampon). Cette valeur est également appliquée en entrée du compteur local 23, afin de remettre celui-ci à la valeur reçue du marquant.

On notera que la perte d'un marquant n'a d'autre incidence que d'augmenter la probabilité de subir une perte ou insertion de cellules, donc d'avoir à corriger un écart plus important ; on se contentera d'attendre le marquant suivant pour entreprendre la correction.

On notera par ailleurs que, dans le cas très peu probable (compte tenu des précautions que l'on aura prises au moyen de codes correcteurs d'erreurs) d'un faux marquant accepté, une fausse correction sera compensée par une correction antagoniste avec le premier marquant suivant correctement reçu. On peut également limiter la plage des corrections possibles à des valeurs raisonnables (± 6, par exemple) pour éviter des corrections anormales.

En phase d'initialisation du récepteur, le compteur de cellules reçues est bloqué, le premier marquant reçu servant à initialiser la valeur du compteur de cellules reçues et à libérer celui-ci.

On va maintenant décrire le circuit 17 de réduction de la gigue et de compensation de la dérive des horloges en référence à la figure 8.

En effet, ayant assuré l'intégrité du nombre de cellules transmises, on dispose d'une mémoire tampon qui doit absorber les écarts de temps de propagation dans le réseau, ceci en raison des mécanismes de files d'attente dans chaque noeud de transit traversé ; cet écart est d'autant plus important qu'il y a de noeuds à traverser et que les jonctions utilisées sont chargées.

On notera incidemment que la mémoire tampon devra être dimensionnée de manière à assurer un remplissage moyen de la moitié de cette mémoire, et qu'il y ait une probabilité négligeable de débordement. La taille de cette mémoire tampon devra prendre en compte le délai de détection d'une interruption de longue durée susceptible de vider le tampon, ainsi que la gigue maximale due au réseau avant introduction des cellules de bourrage.

On asservira alors l'horloge de restitution sur le niveau de remplissage du tampon de réception. Cet asservissement filtrera les variations rapides du remplissage de la mémoire dû au phénomène précédent. En fait, seule la dérive lente de l'horloge devra donner lieu à un recalage de l'horloge de restitution, c'est-à-dire une correction permanente de sa fréquence.

En ce qui concerne la gigue, on a démontré, tant au plan théorique que pratique, que la distribution de probabilité du délai d'attente par noeud de transit suit une loi proche d'une loi du type M/D/1/n (loi d'arrivée poissonienne/ loi de service déterministe/avec 1 serveur/et n sources) quand les sources sont assimilables à des générateurs de trafic poissonien. Lorsque l'on met en série plusieurs transits, et donc que l'on passe par plusieurs noeuds, les distributions de probabilité des délais d'attente pour chaque transit vont se trouver convoluées. Cette opération conduit, au bout de cinq à dix transits, à une distribution de probabilité proche d'une loi normale ayant comme moyenne la somme des valeurs moyennes et comme variance, la somme des diverses variances. Une telle loi a été illustrée schématiquement en C sur la figure 4.

Cette distribution, relative à un instant particulier d'observation, présente dans le temps des variations.

Ainsi, si l'on considère qu'un train de cellules espacées dans le temps de 125 µs correspond au service le plus rapide sur un multiplex, avec 15 cellules servies entre deux cellules du train, il y aura une faible corrélation entre les délais d'attente subis par deux cellules successives du train, à 2 Mbit/s dans cet exemple. La seule contrainte qui existe est le respect de l'ordre des cellules en réception.

En conclusion, on peut donc considérer que le délai de transmission est assimilable à une valeur aléatoire correspondant à la somme d'une variable déterministe (valeur moyenne du temps de transit) et d'un bruit blanc gaussien.

En ce qui concerne la dérive des horloges, on peut se trouver en présence soit d'une dérive sinusoïdale de fréquence soit d'une dérive permanente (« dérapage »).

Dans le premier cas, il suffira d'estimer le nombre maximal de cellules du glissement sinusoïdal pour en tenir compte dans le dimensionnement du tampon.

En revanche, dans le second cas, il sera nécessaire de prévoir une compensation de la dérive par asservissement de l'horloge de restitution.

En réception, la position moyenne du pointeur de remplissage de la mémoire tampon révèle cette dérive, et c'est donc ce paramètre que l'on utilisera pour commander l'asservissement.

Par exemple, avec une horloge à 2,048 Mbit/s de stabilité 10⁻⁵, on aura un glissement maximal de 20 bits par seconde, soit environ une cellule (256 bits) toutes les 12 secondes.

Cet asservissement peut être mis en oeuvre par le circuit 17 illustré figure 8, qui comporte, outre l'horloge de restitution 13 précédemment mentionnée, un compteur/décompteur 24 incrémenté par les tops de cellules reçues CR et décrémenté par les tops de cellules locales CL, une correction étant en outre introduite par le signal CPT de correction du pointeur de tampon. Par ailleurs, la modification de l'état du compteur est inhibée par le signal ILD en cas de détection d'une interruption de longue durée.

Ce compteur délivre un signal d'asservissement de fréquence ASF pilotant l'horloge 13 ; on notera que les tops de cellules locales CL sont simplement obtenus par division, au moyen d'un circuit diviseur de fréquence 25, du signal d'horloge CK délivré par l'horloge locale.

Dans une phase d'initialisation du récepteur, un circuit 26 permet d'écrire dans la mémoire tampon les cellules reçues sans autoriser la lecture du tampon. Lorsque le tampon sera ainsi à demi-rempli, on donnera l'autorisation de lecture au rythme de l'horloge locale (application d'un signal sur l'entrée S (*Set*) de la bascule 26), et l'on initialisera la position du pointeur de mémoire tampon à sa valeur de référence, le compteur 24 étant mis à zéro.

Pour procéder à la correction de fréquence, on peut avantageusement n'utiliser que deux valeurs de fréquences d'horloge de restitution situées chacune en extrémité de la plage de fonctionnement normal, à savoir deux fréquences Fₒ- ΔF et Fₒ + ΔF, avec ΔF/F = 10⁻⁴.

On utilise alors soit l'une soit l'autre de ces deux fréquences en fonction du signe de l'écart entre la position instantanée du pointeur de remplissage du tampon des cellules reçues et le niveau médian de remplissage de celui-ci. A intervalles réguliers, déterminés d'après l'horloge de restitution, on choisit la nouvelle valeur de la fréquence de restitution en fonction de la position du pointeur. Avec les valeurs numériques indiquées plus haut, la fréquence des corrections sera d'au moins 8000 corrections par seconde, et la correction de ± 10⁻⁴ Fₒ.

## Revendications

1. Dispositif pour la transmission d'informations synchrones par un réseau asynchrone (3), tel qu'un réseau de type ATM, dans lequel les éléments d'informations sont véhiculés par paquets de bits de données entre un organe émetteur (1), une interface (4) de l'organe émetteur, un organe récepteur (2), et une interface (5) de l'organe récepteur (2), chacun de ces paquets étant formé d'une cellule d'information (6) comprenant d'une part un en-tête (7) porteur d'une adresse et d'autre part un champ utile (8) porteur de l'information à transmettre, l'organe émetteur (1) et l'organe récepteur (2) fonctionnant entre eux en mode synchrone sur la base d'une horloge locale d'émission et d'une horloge locale de restitution (13) à la réception, respectivement plésiochrones, ledit dispositif d'interface de l'organe récepteur (5) comportant au moins un tampon de restitution (9) recevant en entrée un flux de cellules d'information selon un rythme irrégulier du réseau asynchrone et délivrant en sortie des cellules d'information à un rythme régulier de l'horloge locale de restitution (13), **caractérisé en ce qu'**il comporte en combinaison :
• des premiers moyens (15) pour détecter des interruptions de longue durée ou évanouissement dans le flux de cellules reçues (CR) par ledit organe récepteur (2), comprenant un compteur (18) de cellules locales (CL) avec remise à zéro par chaque cellule locale reçue (CR), des moyens (19) pour comparer une valeur du compteur à une valeur de seuil S prédéterminée, et adapté à générer, en cas de franchissement de ladite valeur seuil S, un signal d'interruption de longue durée (ILD),
• des seconds moyens (16) pour détecter et compenser une perte ou une insertion de cellules, adaptés pour :
• compter le nombre de cellules reçues par l'organe récepteur (2) dans un compteur (23),
• compter le nombre de cellules émises par l'organe émetteur (1) et émettre une cellule spécifique contenant le nombre de cellules émises,
• comparer à chaque réception d'une cellule spécifique, la valeur du nombre contenu dans la cellule spécifique au nombre de cellules reçues, et
• en cas de différence entre lesdites valeurs générer un signal de correction (CPT) pour incrémenter ou décrémenter un pointeur d'adressage (10) du tampon de restitution (9),
• des troisièmes moyens (17) recevant le signal d'interruption de longue durée (ILD), le signal de correction (CPT), les tops de cellules locales (CL), les tops de cellules reçues (CR), adaptés à réduire la gigue et la compensation de la dérive de l'horloge et à générer un signal d'asservissement de fréquence (ASF) fonction du degré de remplissage du tampon de restitution (9) vers ladite horloge de restitution (13), ledit signal d'asservissement de fréquence (ASF) étant inhibé par le signal d'interruption de longue durée (ILD).

2. Dispositif selon la revendication 1 **caractérisé en ce que** lesdits seconds moyens (16) comportent :
• des moyens (21) pour discriminer les cellules normales des cellules spécifiques insérées au niveau de l'organe émetteur (1),
• un circuit (22) adapté à :
• incrémenter le compteur local (23) d'une unité sur réception d'une cellule normale,
• générer sur le top d'horloge (CL) une cellule de bourrage en cas d'interruption de longue durée,
• des moyens (20) pour comparer la valeur contenue dans une cellule spécifique avec la valeur du compteur local (23) et en cas d'écart à produire un signal pour modifier la valeur du pointeur d'adressage (10) du tampon de restitution (9).

3. Dispositif selon l'une des revendications 1 ou 2 **caractérisé en ce qu'**il comporte un compteur/décompteur (24) recevant les tops de cellules locales (CL), les tops de cellules reçues (CR) et le signal de correction (CPT), le signal d'interruption de longue durée (ILD) et à délivrer un signal d'asservissement de fréquence (ASF) vers l'horloge de restitution (13).

4. Dispositif selon la revendication précédente **caractérisé en ce qu'**il comporte un circuit diviseur de fréquence (25) recevant un signal d'horloge de restitution (CK) et délivrant les tops de cellules locales (CL).

5. Dispositif selon l'une des revendications précédentes **caractérisé en ce qu'**il comporte un circuit d'initialisation (26) adapté pour remplir la mémoire tampon à une valeur de référence et à initialiser la position du pointeur d'adressage (10) du tampon de restitution (9) à sa position de référence.

6. Dispositif selon l'une des revendications précédentes **caractérisé en ce que** le paramètre utilisé pour générer le signal d'asservissement est la position moyenne du pointeur d'adressage (10) du tampon de restitution (9).

## Patentansprüche

1. Vorrichtung zur Übertragung synchroner Informationen über ein asynchrones Netz (3) wie etwa ein Netz des ATM-Typs, in dem die Informationselemente in Paketen aus Datenbits zwischen einem Senderelement (1), einer Schnittstelle (4) des Senderelements, einem Empfängerelement (2) und einer Schnittstelle (5) des Empfängerelements (2) transportiert werden, wobei jedes dieser Pakete aus einer Informationszelle (6) gebildet ist, die einerseits einen Adressenträger-Kopf(7) und andererseits ein Nutzfeld (8), das die zu übertragenden Informationen trägt, umfaßt, wobei das Senderelement (1) und das Empfängerelement (2) untereinander im synchronen Modus auf der Basis eines lokalen Takts zum Senden und eines lokalen Wiederherstellungstakts (13) beim Empfang bzw. im plesiochronen Modus arbeiten, wobei die Schnittstellenvorrichtung des Empfängerelements (5) wenigstens einen Wiederherstellungspuffer (9) enthält, der am Eingang in einem unregelmäßigen Takt des asynchronen Netzes einen Strom von Informationszellen empfängt und am Ausgang in einem regelmäßigen Takt des lokalen Wiederherstellungstakts (13) Informationszellen liefert, **dadurch gekennzeichnet, daß** sie in Kombination umfaßt:
- erste Mittel (15) zum Erfassen von Unterbrechungen mit langer Dauer oder eines Abklingens im Strom der empfangenen Zellen (CR) durch das Empfängerelement (2), mit einem Zähler (18) für lokale Zellen (CL) mit Nullrücksetzung durch jede empfangene lokale Zelle (CR), Mitteln (19) zum Vergleichen eines Wertes des Zählers mit einem vorgegebenen Schwellenwert S, die bei einer Überschreitung des Schwellenwertes S ein Unterbrechungssignal (ILD) mit langer Dauer erzeugen können,
- zweite Mittel (16) zum Erfassen und Kompensieren eines Verlusts oder einer Einfügung von Zellen, die so beschaffen sind, daß sie:
- die Anzahl der vom Empfängerelement (2) empfangenen Zellen in einem Zähler (23) zählen,
- die Anzahl der vom Senderelement (1) gesendeten Zellen zählen und eine spezifische Zelle, die die Anzahl der gesendeten Zellen enthält, senden,
- bei jedem Empfang einer spezifischen Zelle den Wert der in der spezifischen Zelle enthaltenen Anzahl mit der Anzahl der empfangenen Zellen vergleichen und
- bei einer Differenz zwischen den Werten ein Korrektursignal (CPT) erzeugen, um einen Adressierungszeiger (10) des Wiederherstellungspuffers (9) zu inkrementieren oder zu dekrementieren,
- dritte Mittel (17), die das Unterbrechungssignal (ILD) mit langer Dauer, das Korrektursignal (CPT), die Kennimpulse der lokalen Zellen (CL) und die Kennimpulse der empfangenen Zellen (CR) empfangen und das Zittern und die Trimmung der Ableitung des Takts verringern können und ein Signal ASF, das die Frequenz in Abhängigkeit vom Befüllungsgrad des Wiederherstellungspuffers (9) in Richtung zum Wiederherstellungstakt (13) regelt, erzeugen können, wobei das Frequenzregelungssignal (ASF) durch das Unterbrechungssignal (ILD) mit langer Dauer gesperrt wird.

2. Vorrichtung nach Anspruch 1, **dadurch gekennzeichnet, daß** die zweiten Mittel (16) umfassen:
- Mittel (21) zum Unterscheiden normaler Zellen von spezifischen Zellen, die auf seiten des Senderelements (1) eingefügt werden,
- eine Schaltung (22), die so beschaffen ist, daß sie:
- den lokalen Zähler (23) bei Empfang einer normalen Zelle um eine Einheit inkrementiert,
- beim Taktkennimpuls (CL) eine Transportfehler-Zelle erzeugt, wenn eine Unterbrechung mit langer Dauer auftritt,
- Mittel (20) zum Vergleichen des in einer spezifischen Zelle enthaltenen Wertes mit dem Wert des lokalen Zählers (23) und, falls eine Differenz vorhanden ist, zum Erzeugen eines Signals, um den Wert des Adressierungszeigers (10) des Wiederherstellungspuffers (9) zu modifizieren.

3. Vorrichtung nach einem der Ansprüche 1 oder 2, **dadurch gekennzeichnet, daß** sie einen Aufwärts/Abwärtszähler (24) umfaßt, der die Kennimpulse der lokalen Zellen (CL), die Kennimpulse der empfangenen Zellen (CR) und das Korrektursignal (CPT) sowie das Unterbrechungssignal (ILD) mit langer Dauer empfängt und ein Signal (ASF) zur Regelung der Frequenz in Richtung zum Wiederherstellungstakt (13) liefert.

4. Vorrichtung nach dem vorhergehenden Anspruch, **dadurch gekennzeichnet, daß** sie eine Frequenzteilerschaltung (25) umfaßt, die ein Wiederherstellungstaktsignal (CK) empfängt und die Kennimpulse der lokalen Zellen (CL) liefert.

5. Vorrichtung nach einem der vorhergehenden Ansprüche, **dadurch gekennzeichnet, daß** sie eine Initialisierungsschaltung (26) umfaßt, die so beschaffen ist, daß sie den Pufferspeicher mit einem Referenzwert füllt und die Position des Adressierungszeigers (10) des Wiederherstellungspuffers (9) auf seine Referenzposition initialisiert.

6. Vorrichtung nach einem der vorhergehenden Ansprüche, **dadurch gekennzeichnet, daß** der Parameter, der verwendet wird, um das Regelungssignal zu erzeugen, die mittlere Position des Adressierungszeigers (10) des Wiederherstellungspuffers (9) ist.

## Claims

1. Device for transmitting synchronous information via an asynchronous network (3), such as an ATM-type network, in which the information elements are transported in packets of data bits between a sending unit (1), an interface (4) of the sending unit, a receiving unit (2) and an interface (5) of the receiving unit (2), each of these packets being formed from an information cell (6) comprising, on the one hand, a header (7) carrying an address and, on the other hand, a payload field (8) carrying the information to be transmitted, the sending unit (1) and the receiving unit (2) working together in synchronous mode on the basis of a local sending clock and of a local restitution clock (13) upon reception, which are respectively plesiochronous, the said interface device of the receiving unit (5) including at least one restitution buffer (9) receiving, as input, a flow of information cells at an irregular rate from the asynchronous network and delivering, as output, information cells at a regular rate of the local restitution clock (13), **characterized in that** it includes, in combination:
- first means (15) for detecting long-duration interruptions or fading in the flow of cells received (CR) by the said receiving unit (2), comprising a local-cell (CL) counter (18) with zero reset by each local received cell (CR), means (19) for comparing a value of the counter with a predetermined threshold value S, and suitable, in the event of the said threshold value S being crossed, for generating a long-duration interruption signal (ILD),
- second means (16) for detecting and compensating for a loss or an insertion of cells, suitable for:
- counting the number of cells received by the receiving unit (2) in a counter (23),
- counting the number of cells sent by the sending unit (1) and sending a special cell containing the number of cells sent,
- upon each reception of a special cell, comparing the value of the number contained in the special cell with the number of cells received, and
- in the event of a difference between the said values, generating a correction signal (CPT) in order to increment or decrement an addressing pointer (10) of the restitution buffer (9),
- third means (17) receiving the long-duration interruption signal (ILD), the correction signal (CPT), the local-cell strobes (CL), the received-cell strobes (CR), suitable for reducing the jitter and the compensation for the drift in the clock and for generating a frequency-slaving signal (ASF) which is a function of the fill level of the restitution buffer (9) to the said restitution clock (13), the said frequency-slaving signal (ASF) being inhibited by the long-duration interruption signal (ILD).

2. Device according to Claim 1, **characterized in that** the said second means (16) include:
- means (21) for distinguishing the normal cells from the special cells inserted at the sending unit (1),
- a circuit (22) suitable for:
- incrementing the local counter (23) by one unit upon reception of a normal cell,
- generating, at the clock strobe (CL), a padding cell in the event of a long-duration interruption,
- means (20) for comparing the value contained in a special cell with the value of the local counter (23) and, in the event of a discrepancy, for producing a signal in order to alter the value of the addressing pointer (10) of the restitution buffer (9).

3. Device according to one of Claims 1 and 2, **characterized in that** it includes an up/down counter (24) receiving the local-cell strobes (CL), the received-cell strobes (CR) and the correction signal (CPT), the long-duration interruption signal (ILD), and for delivering a frequency-slaving signal (ASF) to the restitution clock (13).

4. Device according to the preceding claim, **characterized in that** it includes a frequency-divider circuit (25) receiving a restitution-clock signal (CK) and delivering the local-cell strobes (CL).

5. Device according to one of the preceding claims, **characterized in that** it includes an initialization circuit (26) suitable for filling the buffer memory to a reference value and for initializing the position of the addressing pointer (10) of the restitution buffer (9) at its reference position.

6. Device according to one of the preceding claims, **characterized in that** the parameter used to generate the slaving signal is the average position of the addressing pointer (10) of the restitution buffer (9).
